# EUROPEAN PATENT SPECIFICATION

(11) **EP 2 397 521 B1**
(45) Date of publication and mention of the grant of the patent: **25.01.2017**
(21) Application number: 09840042.7
(22) Date of filing: 26.11.2009
(51) Int. Cl.: C08L 61/34, C08G 14/073, C08J 5/24, C08L 63/00

(54) **BENZOXAZINE RESIN COMPOSITION**
BENZOXAZINHARZZUSAMMENSETZUNG
COMPOSITION DE RÉSINE DE BENZOXAZINE

(30) Priority: 12.02.2009 JP 2009030017
(43) Date of publication of application: 21.12.2011
(73) Proprietor: JX Nippon Oil & Energy Corporation, Chiyoda-ku Tokyo 100-8162 (JP); Fuji Jukogyo Kabushiki Kaisha, Tokyo 150-8554 (JP)
(72) Inventor: IHARA Hiroyasu, Tokyo 100-8162 (JP); YAMAGUCHI Eikatsu, Tokyo 160-8316 (JP); SEKINE Naoyuki, Tokyo 160-8316 (JP)
(74) Representative: Hallybone, Huw George
(86) International application number: PCT/JP2009/069909
(87) International publication number: WO 2010/092723

(56) References cited:
- EP-A1- 1 602 689
- WO-A1-03/018674
- WO-A1-2005/118604
- WO-A1-2007/064801
- WO-A2-02/057333
- WO-A2-02/057361
- JP-A- 11 158 349
- JP-A- H06 145 306
- JP-A- 2002 212 269
- JP-A- 2004 010 683
- JP-A- 2006 233 188
- JP-A- 2007 016 121
- JP-A- 2007 016 121
- JP-A- 2008 094 961

## Description

The present invention relates to benzoxazine resin compositions having excellent curability, fiber-reinforced composite materials utilizing the resin composition and suitable for use in airplane-, ship-, automobile-, sport-, and other general industry-related applications, and prepreg useful for obtaining the composite materials.

Fiber-reinforced composite materials composed of various fibers and a matrix resin are widely used in airplanes, ships, automobiles, sporting goods, and other general industrial applications for their remarkable mechanical characteristics. The range of application of fiber-reinforced composite materials has recently been expanding more and more as their performance in actual use is accumulated.

For achieving lighter weight compared to the currently-used composite materials, higher mechanical properties are required, and further improvement in properties, such as resistance to fire, heat, moisture, or lightening, is demanded.

In particular, for interior materials for railroad vehicles or airplanes as well as for general industrial applications, fire-resistant or nonflammable materials are required in order to avoid the risk of generation oftoxic gas, such as carbon monoxide, when fire breaks out.

As compositions or prepregused for the above-mentioned composite materials, those employing compounds having a benzoxazine ring are proposed, for example, in Patent Publications 1 to 8. The compounds having a benzoxazine ring are synthesized from phenols and amines, and expected to have fire resistance as their structure when cured is similarto phenolresins, which are highlyfire-resistant.

Irrespective of the above, compositions for prepreg prepared from conventional compounds having a benzoxazine ring had drawbacks in inferior resistance to heat and moisture.
Patent Publication 1: JP-2001-310957-A
Patent Publication 2: JP-2003-20410-A
Patent Publication 3: JP-2006-233188-A
Patent Publication 4: JP-2007-16121-A
Patent Publication 5: JP-2008-214547-A
Patent Publication 6: JP-2008-214561-A
Patent Publication 7: JP-2008-56795-A
Patent Publication 8:JP-2008-94961-A

WO 2005/118604 (A1) discloses phosphorus-containing compounds which are obtainable by reacting: (A) at least one organophosphorus compound having a group selected from the group H-P= 0 ; the group P-H and the group P-OH; and (B) at least one compound having the following Formula: [R'(Y)m']m(X - O - R")n wherein R' is an organic group; Y is a functional group selected from hydroxy, carboxylic acid, carboxylate, acid anhydride, and amine; -SH, -SO3H, -CONH2, -NHCOOR, phosphite and phosphinate groups X is a hydrocarbylene group; R" is hydrogen or a hydrocarbyl group having from 1 to 8 carbon atoms, R is alkyl or aryl group having from 1 to 12 carbon atoms; m', m and n are, independently, numbers equal to or greater than 1.

JP-2002-212269 (A) provides an epoxy resin composition comprising, as the essential components, (A) an epoxy resin, (B) a phenolic resin, (C) a benzoxazine to be represented by the formula 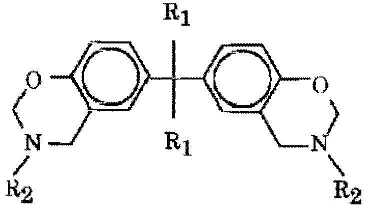 (wherein R₁ is a hydrogen atom or a C₁₋₄ alkyl group; and R₂ is a C₁₋₄ alkyl group or a phenyl group), (D) an amine based curing accelerator, and (E) an inorganic filler at a compounding ratio of the above phenolic resin (B) to the above benzoxiazine (C) of 20:80 to 95:5.

WO 2007/064801 (A1) relates to curable compositions of benzoxazines, a combination of adducts one of which is prepared from hydroxy-containing compounds, isocyanate-containing compounds and phenolic compounds and the second of which is prepared from the first adduct and epoxy-containing compounds and phenolic compounds, epoxy resins and optionally tougheners.

EP 1602689 (A1) describes an epoxy resin composition comprises (A) 1% to 10% by weight of a polyepoxy compound, (B) 1% to 10% by weight of a curing agent selected from a cyanate compound and a benzoxazine compound, (C) 0.1% to 5% by weight of a polyhydric phenol compound, and (D) 80% to 97.9% by weight of a spherical filler having an elastic modulus of 300 GPa or higher and has a void of 3% or less.

WO 02/057361 (A2) describes a curing agent for epoxy resins, comprising (a) 30 to 99 parts by weight of (i) a modified phenol resin, which is obtained by polycondensation of a heavy oil or pitch, a phenol and an aldehyde compound in the present of an acid catalyst, and/or of (ii) a a phenol resin having a hydrocarbon group with small polarity between phenol nuclei represented by the following general formula (I): 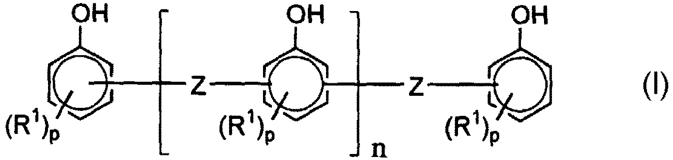 wherein R¹'s may be the same or different from each other and each represent an alkyl group having 1 to 10 carbon atoms, substituted or non substituted phenyl group, substituted or non substituted aralkyl group or alkoxy group; Z's may be the same or different from each other and each represent a divalent hydrocarbon group having 1 to 20 carbon atoms to which a nitrogen atom, oxygen atom, phosphorus atom or sulfur atom may be bonded, at least one Z in one molecule is a divalent hydrocarbon group having 5 to 20 carbon atoms to which a nitrogen atom, oxygen atom, phosphorus atom or sulfur atom may be bonded; n is a number of 0 to 8 as an average value; and p's may be the same or different from each other and each represent an integer of 0 to 3, (b) 1 to 70 parts by weight of a thiodiphenol compound represented by the following general formula (II): 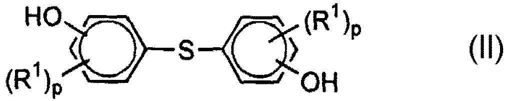 wherein R¹'s may be the same or different from each other and each represent an alkyl group having 1 to 12 carbon atoms, substituted or non substituted phenyl group, substituted or non substituted aralkyl group or alkoxy group, and p's may be the same or different from each other and each represent an integer of 0 to 3, and (c) 0 to 100 parts by weight of a polyhydric phenol compound having a structure other than the components (a) and (b), and epoxy resin composition comprising them, in particular to be used for semiconductor encapsulation.

WO 02/057333 (A2) provides an epoxy resin composition for semiconductor encapsulation, which has a low melt viscosity, is excellent in storage stability and moldability, and gives a cured product having excellent solder crack resistance. Said epoxy resin composition comprises, as essential components: (a) as an epoxy resin, a biphenol type epoxy resin represented by general formula (I) (where R¹-R⁸ represent hydrogen, an alkyl group, a phenyl group, an aralkyl group, or an alkoxyl group, and n is 0-5); (b) as a phenol type hardener, a thiodiphenol compound represented by general formula (II) and a polyhydric phenol compound having a structure other than the thiodiphenol compound (where X represents an alkyl group, a phenyl group, an aralkyl group, or an alkoxyl group, and m is 0-3); (c) an inorganic filler; and (d) a curing accelerator.

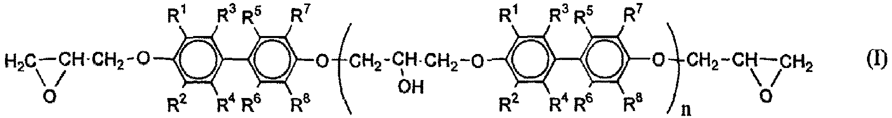

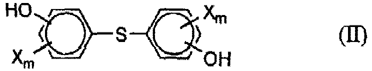

JP-H06-145306 (A) provides a composition containing a curing agent containing 5-50wt.% thiodiphenol of the formula 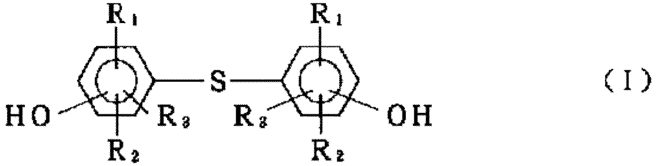 wherein R1, R2 and R3 are each hydrogen, halogen, 1-12 C alkyl, aryl, aralkyl, cycloalkyl, alkoxyl or hydroxyl.

It is an object of the present invention to provide a benzoxazine resin composition having superior resistance to heat and moisture and providing excellent handleability. when made into prepreg, and prepreg and a fiber-reinforced composite material prepared from the composition.

It is another object of the present invention to provide prepreg and a fiber-reinforced composite material of which mechanical strength, such as compressive strength, is inhibited from lowering even in the high-temperature, high humidity environment.

### Summary of the Invention

According to the present invention, there is provided a benzoxazine resin composition comprising:
(A) a compound having in its molecule a
   benzoxazine ring represented by the formula (1): 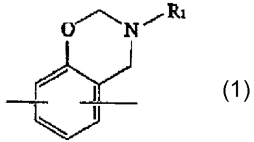 wherein R₁ stands for a chain alkyl group having 1 to 12 carbon atoms, a cyclic alkyl group having 3 to 8 carbon atoms, a phenyl group, or a phenyl group substituted with a chain alkyl group having 1 to 12 carbon atoms or halogen; and a hydrogen atom is bonded to at least one of the carbon atoms of the aromatic ring at ortho- or para-position to the carbon atom to which the oxygen atom is bonded (sometimes referred to as component (A) or the benzoxazine resin hereinbelow);
(B) an epoxy resin (sometimes referred to as
   component (B) hereinbelow;
(C) bisphenol sulphide (sometimes referred as component
   (C) hereinbelow); and
(D) a toughness improver (sometimes referred to as component (D)herein below) (the entire composition sometimes referred to as a present composition hereinbelow), wherein a content of said epoxy resin (B) is 10 to 60 parts per mass based on 100 parts by mass of the compound (A),
wherein a content of said bisphenol sulfide (C) is 5 to 30 parts by mass based on 100 parts by mass of the compound (A) and the epoxy resin (B) together, wherein a content of said toughness improver (D) is 1 to 60 parts by mass based on 100 parts by mass of the compound (A).

According to the present invention, there is also providedprepreg comprising are inforcing fiber substrate impregnated with the present composition.

According to the present invention, there isfurther provided afiber-reinforced compositematerialconsisting of a cured product of the present composition and a reinforcing fiber substrate.

The benzoxazine resin composition of the present invention,whichcontains components (A) to (D) mentioned above, is excellent in resistance to heat and moisture, and in handleability when made into prepreg.

The prepreg and the fiber-reinforced composite material of the present invention, inwhich the present composition is employed, are excellent in resistance to heat and moisture, and in particular, deterioration of mechanical strength, such as compressive strength, is suppressed even in the high-temperature, high-humidity environment.

Thefiber-reinforcedcompositematerial of the present invention, in which a cured product of the present composition is employed and is excellent in resistance to heat and moisture, may suitablybe used in airplane-,ship-, automobile-, sport-, and other general industry-related applications.

### Detailed Description

The present invention will be explained in detail.

In the present composition, component (A)is a benzoxazine resin represented by the formula (1) above.

In the formula (1), R₁ stands for a chain alkyl group having 1 to 12 carbon atoms, a cyclic alkyl group having 3 to 8 carbon atoms, a phenyl group, or a phenyl group substituted with a chain alkylgroup having 1 to 12 carbon atoms orhalogen.

Examplesof thechainalkylgrouphaving 1 to 12 carbon atoms may include methyl, ethyl, propyl, isopropyl,n-butyl, isobutyl, and t-butyl groups.

Examples of the cyclicalkyl group having 3 to 8 carbon atoms may include cyclopentyl and cyclohexyl groups.

Examples of the phenyl group substituted with a chain alkylgroup having 1 to 12 carbon atoms or halogen may include phenyl, o-methylphenyl, m-methylphenyl, p-methylphenyl, o-ethyl phenyl, m-ethyl phenyl, p-ethyl phenyl, o-t-butyl phenyl,m-t-butylphenyl, p-t-butylphenyl, o-chlorophenyl, and o-bromophenyl groups.

Among the above-mentioned examples, R1 may preferably beamethyl,ethyl, propyl, phenyl, oro-methylphenyl group for providing good handleability.

Examples of the benzoxazine resin of component (A) may preferably include monomers represented by the following
formulae, oligomers obtained by polymerization of some molecules of such monomers, and reactants of at least one of such monomers and a compound having a benzoxazine ring and a structure different from such monomers.

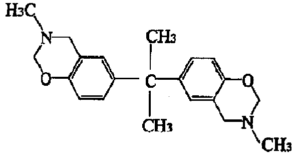

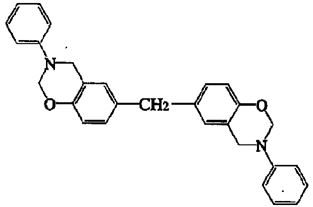

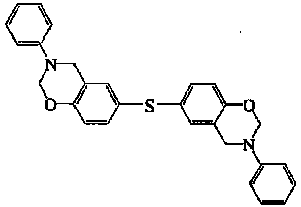

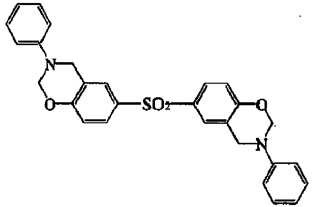

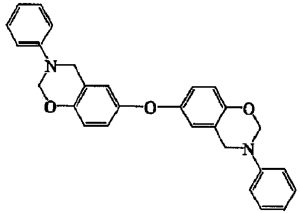

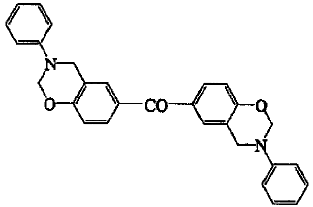

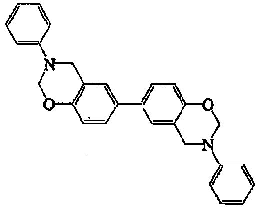

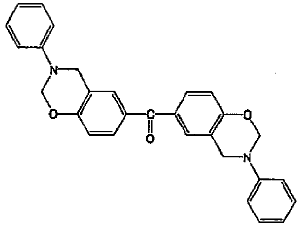

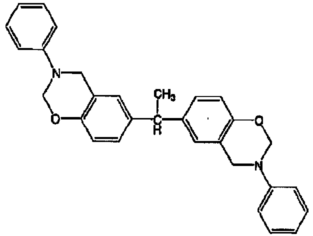

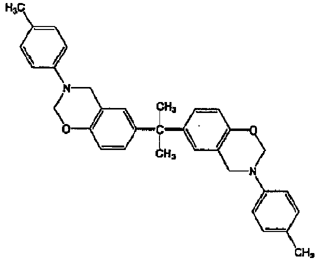

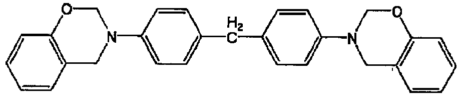

Component (A) gives excellent fire resistance due to polymerization of the benzoxazine ring by ring opening to form a skeleton similar to a phenol resin. Its dense structure also provides excellent mechanical properties, such as low water absorption and high elasticity.

Component (B), an epoxy resin, of the present composition controls the viscosity of the composition and increases the curability of the composition.

Examples of component (B) may preferably include epoxy resins derived from precursor compounds such as amines, phenols, carboxylic acid, or intramolecular unsaturated carbon.

Examples of the epoxy resins derived from precursor amines may include tetraglycidyl diamino diphenyl methane, glycidylated xylenediamine, triglycidyl amino phenol, or glycidyl aniline; position isomers thereof; and alkyl group- or halogen-substitution products thereof.

Hereinbelow, when commercial products are referred to as examples, complex viscoelasticity η* at 25 °C measured with the dynamic viscoelastometer to be discussed later is mentioned as a viscosity for those in a liquid form.

Examples of commercial products of tetraglycidyl diamino diphenyl methane may include SUMIEPOXY (registered trademark) ELM434 (manufactured by SUMITOMO CHEMICAL CO., LTD.), ARALDITE (registered trademark) MY720, ARALDITE (registered trademark) MY721, ARALDITE (registered trademark)MY9512,ARALDITE (registeredtrademark) MY9612, ARALDITE (registered trademark) MY 9634, ARALDITE (registered trademark) MY 9663 (all manufactured by HUNTSMAN ADVANCED MATERIALS), and jER (registered trademark) 604 (manufactured by JAPAN EPOXY RESIN).

Examples of commercial products of glycidylated xylene diamine may include TETRAD (registered trademark) -X (viscosity: 2000 mPa·s) (manufactured by MITSUBISHI GAS CHEMICAL COMPANY, INC.).

Examples of commercial products of triglycidyl amino phenol may include jER (registered trademark) 630 (viscosity: 750 mPa·s) (manufactured by JAPAN EPOXY RESIN), ARALDITE (registered trademark) MY0500 (viscosity: 3500 mPa·s) andMY0510 (viscosity: 600 mPa·s) (both manufactured by HUNTSMAN ADVANCED MATERIALS), and ELM100 (viscosity: 16000 mPa·s) (manufactured by SUMITOMO CHEMICAL CO. , LTD.).

Examples of commercial products of glycidyl anilines may include GAN (viscosity: 120 mPa·s) and GOT (viscosity: 60 mPa·s) (both manufactured by NIPPON KAYAKU CO., LTD.).

Examples of epoxy resins of glycidyl ether type derived from phenol precursors may include bisphenol A type epoxy resin, bisphenol F type epoxy resin, bisphenol S type epoxy resin, epoxy resin having a biphenyl skeleton, phenol novolak type epoxy resin, cresol novolak type epoxy resin, resorcinol type epoxy resin, epoxy resin having a naphthalene skeleton, trisphenylmethane type epoxy resin, phenol aralkyl type epoxy resin, dicyclopentadiene type epoxy resin, or diphenylfluorene type epoxy resin; various isomers thereof; and alkyl group- or halogen-substituted products thereof.

Epoxy resins obtained by modifying an epoxy resin derived from a phenol precursor with urethane or isocyanate are also included in this type.

Examples of commercial products of liquid bisphenol A type epoxy resin may include jER (registered trademark) 825 (viscosity: 5000 mPa·s), jER (registered trademark) 826 (viscosity: 8000 mPa·s), jER (registered trademark) 827 (viscosity: 10000 mPa·s), jER (registered trademark) 828 (viscosity: 13000 mPa·s) (all manufactured by JAPAN EPOXY RESIN), EPICLON (registered trademark) 850 (viscosity: 13000 mPa·s) (manufactured by DAINIPPON INK AND CHEMICALS), EPOTOHTO (registered trademark) YD-128 (viscosity: 13000 mPa·s) (manufactured by TOHTO KASEI CO., LTD.), DER-331 (viscosity: 13000 mPa·s), and DER-332 (viscosity: 5000 mPa·s) (manufactured by THE DOW CHEMICAL COMPANY).

Examples of commercial products of solid or semisolid bisphenol A type epoxy resin may include jER (registered trademark) 834, jER (registered trademark) 1001, jER (registered trademark) 1002, jER (registered trademark) 1003, jER (registered trademark) 1004, jER (registered trademark) 1004AF, jER (registered trademark) 1007, and jER (registered trademark) 1009 (all manufactured by JAPAN EPOXY RESIN).

Examples of commercial products of liquid bisphenol F type epoxy resin may include jER (registered trademark) 806 (viscosity: 2000 mPa·s), jER (registered trademark) 807 (viscosity: 3500 mPa·s), jER (registered trademark) 1750 (viscosity: 1300 mPa·s), jER (registered trademark) (all manufactured by JAPAN EPOXY RESIN), EPICLON (registered trademark) 830 (viscosity: 3500 mPa·s) (manufactured by DAINIPPON INK AND CHEMICALS), EPOTOHTO (registered trademark) YD-170 (viscosity: 3500 mPa·s), and EPOTOHTO (registered trademark) YD-175 (viscosity: 3500 mPa·s) (both manufactured by TOHTO KASEI CO., LTD.).

Examples of commercial products of solid bisphenol F type epoxy resin may include 4004P, jER (registered trademark) 4007P, jER (registered trademark) 4009P (all manufactured by JAPAN EPOXY RESIN), EPOTOHTO (registered trademark) YDF2001, and EPOTOHTO (registered trademark) YDF2004 (both manufactured by TOHTO KASEI CO., LTD.).

Examples of bisphenol S type epoxy resin may include EXA-1515 (manufactured by DAINIPPON INK AND CHEMICALS).

Examples of commercial products of epoxy resin having a biphenyl skeleton may include jER (registered trademark) YX4000H, jER (registered trademark) YX4000, jER (registered trademark) YL6616 (all manufactured by JAPAN EPOXY RESIN), and NC-3000 (manufactured by NIPPON KAYAKU CO., LTD.).

Examples of commercial products of phenol novolak type epoxy resin may include jER (registered trademark) 152, jER (registered trademark) 154 (both manufactured by JAPAN EPOXY RESIN), EPICLON (registered trademark) N-740, EPICLON (registered trademark) N-770, and EPICLON (registered trademark) N-775 (all manufactured by DAINIPPON INK AND CHEMICALS).

Examples of commercial products of cresol novolak type epoxy resin may include EPICLON (registered trademark) N-660, EPICLON (registered trademark) N-665, EPICLON (registered trademark) N-670, EPICLON (registered trademark) N-673, EPICLON (registered trademark) N-695 (all manufactured by DANIPPON INK AND CHEMICALS), EOCN-1020, EOCN-1025, and EOCN-1045 (allmanufacturedbyNIPPONKAYAKU CO., LTD.).

Examples of commercial products of resorcinol type epoxy resin may include DENACOL (registered trademark) EX-201 (viscosity: 250 mPa·s) (manufactured by NAGASE CHEMTEX CORPORATION).

Examples of commercial products of epoxy resin having a naphthalene skeleton may include EPICLON (registered trademark) HP4032 (manufactured by DANIPPON INK AND CHEMICALS), NC-7000, and NC-7300 (both manufactured by NIPPON KAYAKU CO., LTD.).

Examples of commercial products of trisphenylmethane type epoxy resin may include TMH-574 (manufactured by SUMITOMO CHEMICAL CO., LTD.).

Examples of commercial products of dicyclopentadiene type epoxy resin may include EPICLON (registered trademark) HP7200, EPICLON (registered trademark) HP7200L, EPICLON (registered trademark) HP7200H (all manufactured by DANIPPON INK AND CHEMICALS), TACTIX (registered trademark) 558 (manufactured by HUNTSMAN ADVANCED MATERIALS), XD-1000-1L, and XD-1000-2L (both manufactured by NIPPON KAYAKU CO., LTD.).

Examples of commercial products of epoxy resin modified with urethane or isocyanate may include AER4152 (manufactured by ASAHI KASEI EPOXY) having an oxazolidone ring and ACR1348 (manufactured by ASAHI DENKA).

Examples of epoxy resin derived from precursor carboxylic acid may include glycidylated phthalic acid, hexahydrophthalic acid, glycidylated dimer acid, and various isomers thereof.

Examples of commercial products of diglycidyl phthalate may include EPOMIK (registered trademark) R508 (viscosity: 4000 mPa·s) (manufactured by MITSUI CHEMICALS INC.) and DENACOL (registered trademark) EX-721 (viscosity: 980 mPa·s) (manufactured by NAGASE CHEMTEX CORPORATION).

Examples of commercial products of diglycidyl hexahydrophthalate may include EPOMIK (registered trademark) R540 (viscosity: 350 mPa·s) (manufactured by MITSUI CHEMICALS INC.) and AK-601 (viscosity: 300 mPa·s) (manufactured by NIPPON KAYAKU CO., LTD.).

Examples of commercial products of diglycidyl ester of dimer acid may include jER (registered trademark) 871 (viscosity: 650 mPa·s) (manufactured by JAPAN EPOXY RESIN) and EPOTOHTO (registered trademark) YD-171 (viscosity: 650 mPa·s) (manufactured by TOHTO KASEI CO., LTD.).

Examples of epoxy resin derived from precursor intramolecular unsaturated carbon may include alicyclic epoxy resins.

More specifically, examples of commercial products of (3',4'-epoxycyclohexane) methyl-3,4-epoxycyclohexane carboxylate may include CELLOXIDE (registered trademark) 2021P (viscosity: 250 mPa·s) (manufactured by DAICEL CHEMICAL INDUSTRIES, LTD.) andCY179 (viscosity: 400 mPa·s) (manufactured by HUNTSMAN ADVANCED MATERIALS), examples of commercial products of (3',4'-epoxycyclohexane) octyl-3,4-epoxycyclohexane carboxylate may include CELLOXIDE (registered trademark) 2081 (viscosity: 100 mPa·s) (manufactured by DAICEL CHEMICAL INDUSTRIES, LTD.), and examples of commercial products of 1-methyl-4-(2-methyloxiranyl)-7-oxabicyclo [4.1.0] heptane may include CELLOXIDE (registered trademark) 3000 (viscosity: 20 mPa·s) (manufactured by DAICEL CHEMICAL INDUSTRIES, LTD.).

In the present composition, the content of component (B) is 10 to 60 parts by mass based on 100 parts by mass of the benzoxazine resin of component (A).

The 25°C viscosity of epoxy resins which are in liquid form at 25°C is lower the better in view of tackiness and draping properties. The 25°C viscosity of the epoxy resins is preferably not lower than 5 mPa·s and not higher than 20000 mPa·s, more preferably not lower than 5 mPa·s and not higher than 15000mPa·s. At over 20000mPa·s, tackiness and draping properties may be deteriorated.

Epoxy resins in solid form at 25°C are preferable since epoxy resins having higher aromatic contents improves fire resistance, and may be, for example, epoxy resins having a biphenyl skeleton, epoxy resins having a naphthalene skeleton, or phenolaralkyl type epoxy resins.

Component (C) of the present composition is bisphenol sulphide.
Use of sulfide of polyfunctional phenol type, such as bisphenol sulfide, is particularly preferred for remarkably suppressing deterioration of the mechanical strength, such as compressive strength, of the resulting prepreg or fiber-reinforced composite material in high-temperature and high-humidity environment.

The bisphenol sulphide reacts with benzoxazine of component (A) and an epoxy resin of component (B) to give a resin composition or a fiber-reinforced composite material having excellent resistance to heat and moisture.

In the present composition, the content of component
(C) is preferably 5 to 30 parts by mass, more preferably 7 to 25 parts by mass based on 100 parts by mass of components (A) and (B) together. At less than 5 parts by mass, the curing reaction will not proceed, so that curing of the entire resin composition may not be sufficient. At over 30 parts by mass, mechanical properties, such as the glass transition temperature, of the cured product may be deteriorated.

The toughness improver of component (D) of the present composition may be at least one selected from the group consisting of inorganic fine particles, organic fine particles, and a dispersion of inorganic and/or organic fine particles in a liquid resin or a resin monomer. In this regard, however, even when dispersed in a resin composition, part of the particles may be dissolved in the resin composition, or even when dissolved, part of the particles may exist as particles without being dissolved due to polymerization or for other reasons. Either of these may be used.

Examples of the liquid resin or the resin monomer may include reactive elastomers, HYCAR CTBN modified epoxy resins, HYCAR CTB modified epoxy resins, urethane-modified epoxy resins, epoxy resins to which nitrile rubber is added, epoxy resins to which cross-linked acrylic rubber fine particles are added, silicon-modified epoxy resins, and epoxy resins to which thermoplastic elastomer is added.

Examples of the inorganic fine particles may include mica, alumina, tarc, silica fine particles, wollastonite, sepiolite, basic magnesium sulfate, calcium carbonate, polytetrafluoroethylene powders, zinc dust, and aluminum powder.

Examples of the organic fine particles may include thermosetting resin fine particles, thermoplastic resin fine particles and mixtures thereof.

Examples of the thermosetting resin fine particles may include epoxy resin fine particles, phenol resin fine particles, melamine resin fine particles, urea resin fine particles, silicon resin fine particles, urethane resin fine particles, and mixtures thereof. Among these, epoxy resin fine particles and silicon resin fine particles may preferably be used.

The epoxy resin fine particles may be commercially available TORAYPEARL EP (trade name, manufactured by TORAY INDUSTRIES, INC.), and the silicon resin fine particles may be TREFIL E (trade name, manufactured by TORAY DOW CORNING SILICON), TOSPUL (trade name, manufactured by TOSHIBA CORPORATION), or X-52-854 (trade name, manufactured by SHIN-ETSU CHEMICAL CO., LTD.).

Examples of the thermoplastic resin fine particles may include copolymerized polyester resin fine particles, polyimide resin fine particles, polyamide resin fine particles, acrylic fine particles, butadiene-acrylonitrile resin fine particles, styrene fine particles, olefin fine particles, nylon fine particles, butadiene alkylmethacrylate styrene copolymers, acrylate methacrylate copolymers, and mixtures thereof. Among these, acrylic fine particles may preferably be used for its good dispersibility in an epoxy resin.

The copolymerized polyester resin may be a commercial product, such as UNITIKA ELITEL UE3350, UNITIKA ELITEL UE3380, UNITIKA ELITEL UE3620, UNITIKA ELITEL UE3660, UNITIKA ELITEL UE3203 (all trade names, manufactured by UNITIKA LTD.), or VYLON GM900 (trade name, manufactured by TOYOBO CO., LTD.). The molecular weight of the copolymerized polyester resin may be 10000 to 35000, preferably 15000 to 30000.

The acrylic fine particles may be produced by: (1) polymerization of monomers, (2) chemical processing of polymers, or (3) mechanical pulverization of polymers. Method (3) is not preferred since particles obtained by this method are not fine and irregular in shape.

The polymerization may be carried out by emulsion polymerization, soap-free emulsion polymerization, dispersion polymerization, seed polymerization, suspension polymerization, or combination thereof. Among these, emulsion polymerization and/or seed polymerization may be employed to provide fine particles having minute diameters and a partially cross-linked, core/shell, hollow, or polar (epoxy, carboxyl, or hydroxyl group or the like) structure. The partially cross-linked fine particles and/or core/shell fine particles obtained by such polymerization may preferably be used.

Examples of the partially cross-linked fine particles may include partially cross-linked acrylic fine particles and partially cross-linked polystyrene fine particles, and commercially available MR TYPE (trade name, manufactured by SOKEN CHEMICAL & ENGINEERING CO. , LTD.), EPOSTARMA (trade name, manufactured by NIPPON SHOKUBAI CO., LTD.), and MATSUMOTO MICROSPHERE M SERIES (trade name, manufactured by MATSUMOTO YUSHI-SEIYAKU CO., LTD.).

Examples of commercially available core/shell fine particles may include STAFILOID AC3355 (trade name, manufactured by TAKEDA PHARMACEUTICAL COMPANY LIMITED), F351 (trade name, manufactured by ZEON CORPORATION), KUREHA PARALOID EXL-2655 (trade name, manufactured by KUREHA CHEMICAL INDUSTRY CO., LTD.), and MX120 (trade name, manufactured by KANEKA CORPORATION).

The content of component (D), which is employed for improving the toughness of the resin, is preferably 1 to 60 parts by mass, more preferably 1 to 50 parts by mass based on 100 parts by mass of the benzoxazine resin of component (A).

The present composition may optionally contain, for example, nanocarbon, flame retardant, or mold release agent, as long as the properties of the composition are not impaired.

Examples of nanocarbon may include carbon nanotubes, fullerene, and derivatives thereof.

Examples of the flame retardant may include red phosphorus; phosphoric acid esters, such as triphenyl phosphate, tricresyl phosphate, trixylenyl phosphate, cresyldiphenyl phosphate, xylenyldiphenyl phosphate, resorcinol bisphenyl phosphate, and bisphenol A bisdiphenyl phosphate; and boric acid esters.

Examples of the mold release agent may include silicon oil, stearic acid esters, and carnauba wax.

The process of kneading the present composition is not particularly limited, and may be carried out in a kneader, planetary mixer, twin-screw extruder, or the like. When particulate components, such as the flame retarder or inorganic fillers, are used, it is preferred for dispersion of the particles to spread the particles in advance in the liquid resin component to be contained in the benzoxazine resin composition by means of a homo mixer, three-roll mill, ball mill, beads mill, or ultrasound. The processes, such as mixing with a matrix resin or preliminary spreading of the particles, may be carried out under heating/cooling and/or increased/reduced pressure, as required. It is preferred for good storage stability to immediately store the kneaded product in a refrigerator or a freezer.

The viscosity of the present composition is preferably 10 to 3000 Pa·s, more preferably 10 to 2500 Pa·s, most preferably 100 to 2000 Pa·s, at 50 °C in view of the tackiness and draping properties. At less than 10 Pa·s, the change in tackiness of the present composition with the lapse of time due to resin absorption into the fiber layer may be remarkable. At over 3000 Pa·s, the tackiness is low and the draping property may be deteriorated.

In the fiber-reinforced composite material of the present invention, the reinforcing fibers may preferably be glass, carbon, graphite, aramid, boron, alumina, or silicon carbide fibers. A mixture of two or more of these fibers may be used, and for providing lighter and more durable molded products, carbon fibers and graphite fibers are preferably used.

In the present invention, various kinds of carbon fibers and graphite fibers maybe used depending on the application. For providing composite materials having excellent impact resistance, high rigidity, and good mechanical strength, the fibers have a tensile modulus of elasticity measured by a strand tensile test of preferably 150 to 650 GPa, more preferably 200 to 550 GPa, most preferably 230 to 500 GPa.

Incidentally, the strand tensile test is a test wherein a bundle of carbon fibers are impregnated with a resin of the composition to be mentioned below, cured at 130 °C for 35 minutes, and the measurement is made according to JIS R7601 (1986).

In the fiber-reinforced composite material of the present invention, the form of the reinforcing fibers is not particularly limited, and may be unidirectionally oriented continuous fibers, tow, fabrics, mats, knits, braids, and short fibers chopped into a length of less than 10 mm.

As used herein, the continuous fibers are monofilaments or fiber bundles which are substantially continuous for 10 mm or more. The short fibers are fiber bundles chopped into the length of less than 10 mm. For the applications particularly requiring high specific strength and specific elasticity, the reinforcing fiber bundles are most preferably unidirectionally oriented in arrangement, but easily handleable cloth (fabrics) may also be suitably used in the present invention.

The prepreg according to the present invention is produced by impregnating a fiber substrate with the present composition.

The impregnation may be carried out by a wet method wherein the present composition is dissolved in a solvent, such as methyl ethyl ketone or methanol, to lower its viscosity and infiltrated, or by a hot melt method (dry method) wherein the present composition is heated to lower its viscosity and infiltrated.

The wet method includes soaking the reinforcing fibers in a solution of the benzoxazine resin composition, drawing the fibers up, and evaporating the solvent in an oven or the like. The hot melt method includes directly impregnating the reinforcing fibers with the benzoxazine resin composition, of which viscosity has been lowered by heating; or applying the benzoxazine resin composition onto an release paper or the like to prepare a film of the composition, overlaying the reinforcing fibers with the film on one or both sides, and subjecting the fibers with the film to heat and pressure to infiltrate the resin into the reinforcing fibers.

The hot melt method is preferred since substantially no solvent remains in the obtained prepreg.

The prepreg of the present invention preferably has a reinforcing fiber content per unit area of 70 to 2000 g/m². At less than 70 g/m², increased layers of prepreg are required for giving a predetermined thickness to the obtained fiber-reinforced composite material, which may complicate the operation. On the other hand, at over 2000 g/m², the draping property of the prepreg tends to be deteriorated. The weight fraction of fiber is preferably 30 to 90 mass%, more preferably 35 to 85 mass%, most preferably 40 to 80 mass%. At less than 30 mass%, the excess amount of resin may disturb the advantages of the fiber-reinforced composite material, i.e., high specific strength and high specific elasticity, or excess amount of heat may be generated upon curing during molding of the fiber-reinforced composite material. At over 90 mass%, impregnation defect of the resin may occur, resulting in composite materials with increased voids.

The prepreg of the present invention may be made into a fiber-reinforced composite material of the present invention by, after being laminated, curing the resin under heating while pressure is applied to the laminate.

The heat and pressure may be applied, for example, by press molding, autoclave molding, vacuum molding, tape-wrapping, or internal pressure molding.

The tape-wrapping method includes winding prepreg around a core, such as a mandrel, to form a tubular body of the fiber-reinforced composite material, and is suitable for producing rod-shaped articles, such as golf shafts and fishing rods. More specifically, prepreg is wound around a mandrel, a wrapping tape made of a thermoplastic film is wound over the prepreg for fixing and applying pressure to the prepreg, heat-curing the resin in an oven, and withdrawing the mandrel, to obtain a tubular body.

The internal pressure molding includes wrapping prepreg around an inner pressure support, such as a thermoplastic resin tube, to give a perform, setting the perform in a mold, and introducing a highly pressurized gas into the internal pressure support to apply pressure to the perform while heating the mold to obtain a shaped product. This method is suitable for producing articles with complicated forms, such as golf shafts, bats, and tennis or badminton rackets.

The fiber-reinforced composite material of the present invention may alternatively be obtained by directly impregnating a substrate with the resin composition and curing the resin. For example, the fiber-reinforced composite material may be obtained by placing a reinforcing fiber substrate in a mold, pouring the present composition into the mold to impregnate the substrate with the composition, and curing the composition; or by laminating reinforcing-fiber substrates and films of the present composition, and applying heat and pressure to the laminate.

As used herein, the films of the present composition refer to films prepared by applying a predetermined amount of the composition in a uniform thickness onto a release paper or a release film. The reinforcing fiber substrate may be unidirectionally oriented continuous fibers, bidirectional fabrics, nonwoven fabrics, mats, knits, or braids.

The term "laminate" encompasses not only simply overlaying fiber substrates one on another, but also performing by adhering the fiber substrates onto various molds or core materials.

The core materials may preferably be foam cores or honeycomb cores. The foam cores may preferably be made of urethane or polyimide. The honeycomb cores may preferably be aluminum cores, glass cores, or aramide cores.

The fiber-reinforced composite material of the present invention, which has excellent fire resistance and mechanical properties including interlaminar shear strength, may suitably be used for railroad vehicles, airplanes, building components, and other general industrial applications, which require high fire resistance and good mechanical properties.

The present invention will now be explained in more detail with reference to Examples, which are not intended to limit the present invention. Various properties were determined by the following methods.

### [Examples 1 to 3 and Comparative Examples 1 and 2]

In each of the Examples and Comparative Examples, the starting materials were mixed at a ratio shown in Table 1 to prepare a benzoxazine resin composition.

The starting materials used are as follows:

### <Benzoxazine Resin>

F-a (bisphenol F-aniline type, manufactured by SHIKOKU CHEMICALS CORPORATION)
P-d (phenol-diamino diphenyl methane type, manufactured by SHIKOKU CHEMICALS CORPORATION)
P-a (phenol-aniline type, manufactured by SHIKOKU CHEMICALS CORPORATION)

### <Epoxy Resin>

jER807 (bisphenol F type epoxy resin, viscosity: 3500 mP·a, manufactured by JAPAN EPOXY RESIN)
NC-3000 (epoxy resin having a biphenyl skeleton, solid, NIPPON KAYAKU CO., LTD.)
ELM434 (tetraglycidyl diamino diphenylmethane, semisolid, manufactured by SUMITOMO CHEMICAL CO., LTD.)

### < Component C (Curing Agent)>

4,4'-diamino diphenyl sulfone, manufactured by SUMITOMO CHEMICAL CO., LTD.
3,3'-diamino diphenyl sulfone, manufactured by MITSUI
   CHEMICAL FINE
bis(4-hydroxyphenyl)sulfide (manufactured by TOKYO CHEMICAL INDUSTRY CO., LTD.)

### <Toughness Improver>

MX120 (manufactured by KANEKA CORPORATION)
VINYLEK "K (manufactured by CHISSO CORPORATION)

The obtained, uncured benzoxazine resin composition was measured for the viscosity at 50 °C with a dynamic viscoelastometer (RHEOMETER RDA2, manufactured by RHEOMETRIC) using parallel plates of 25 mm diameter, by simple temperature raising at a raising rate of 2 °C/min. at a frequency of 10 Hz and a gap of 1 mm.

The obtained benzoxazine resin composition was cured in an oven at 180 °C for 2 hours to obtain a cured resin product. The cured resin product thus obtained was measured for the midpoint temperature as its glass transition temperature, using a differential scanning calorimeter (DSC) according to JIS K7121 (1987). The mass of the resin composition before and after boiling at 90 °C for 72 hours was measured and the water absorption was determined.

Further, the obtained benzoxazine resin composition was applied to an release paper, and obtained a resin film. Two of the films were arranged on and beneath unidirectionally-oriented carbon fibers to infiltrate, thereby giving prepreg. The carbon fiber content per unit area of this prepreg was 150 g/m², and the matrix resin content per unit area was 67 g/m².

The tackiness of the obtained prepreg was determined by touching. Immediately after the release paper was peeled off of the prepreg surface, the prepreg was pressed with a finger, and those having moderate tackiness were marked with "+++", those having slightly too much or too little tackiness were marked with "++", and those having too much tackiness and unable to be peeled off of the finger, and those having too little tackiness and unable to stick to the finger were marked with "+". The open hole compression strength was also measured at room temperature in the atmosphere according to ASTM D6484. Further, using the same prepreg, the open hole compression strength after exposure to warm water at 82 °C for 3 months was also measured.

The results of the measurements mentioned above are shown in Table 1.

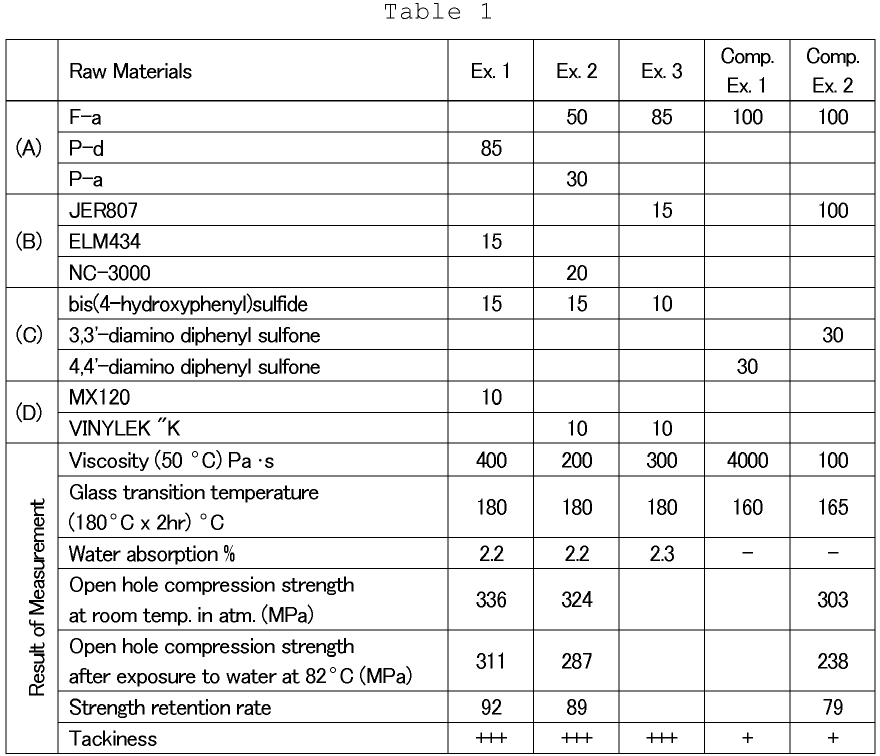

From the results in Table 1, the prepreg of Examples according to the present invention wherein
bisphenol-sulfide compound was used as the curing agent, exhibited better tackiness and improved heat resistance and moisture absorption, compared to those of Comparative Examples.

## Claims

1. A benzoxazine resin composition comprising:
(A) a compound having in its molecule a benzoxazine ring represented by the formula (1): 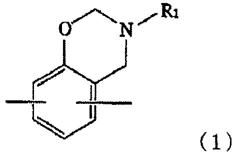 wherein R₁ stands for a chain alkyl group having 1 to 12 carbon atoms, a cyclic alkyl group having 3 to 8 carbon atoms, a phenyl group, or a phenyl group substituted with a chain alkyl group having 1 to 12 carbon atoms or halogen; and a hydrogen atom is bonded to at least one of the carbon atoms of the aromatic ring at ortho- or para-position to the carbon atom to which the oxygen atom is bonded;
(B) an epoxy resin;
(C) bisphenol sulfide; and
(D) a toughness improver,
wherein a content of said epoxy resin (B) is 10 to 60 parts per mass based on 100 parts by mass of the compound (A),
wherein a content of said bisphenol sulfide (C) is 5 to 30 parts by mass based on 100 parts by mass of the compound (A) and the epoxy resin (B) together,
wherein a content of said toughness improver (D) is 1 to 60 parts by mass based on 100 parts by mass of the compound (A).

2. The benzoxazine resin composition according to claim 1, wherein said toughness improver (D) is at least one selected from the group consisting of inorganic fine particles, organic fine particles, and a dispersion of inorganic and/or organic fine particles in a liquid resin or a resin monomer.

3. The benzoxazine resin composition according to claim 1, wherein said epoxy resin (B) is at least one epoxy resin selected from the group consisting of cresol novolak type epoxy resins, phenol novolak type epoxy resins, biphenyl type epoxy resins, naphthalene type epoxy resins, aromatic glycidyl ester type epoxy resins, aromatic amine type epoxy resins, resorcin type epoxy resins, and alicyclic type epoxy resins.

4. The benzoxazine resin composition according to claim 1, wherein said bisphenol sulfide (C) is bis(4-hydroxyphenyl) sulfide.

5. Prepreg obtained by impregnating a reinforcing fiber substrate with a benzoxazine resin composition according to any one of claims 1 to 4.

6. A fiber-reinforced composite material comprising a cured product of a benzoxazine resin composition according to any one of claims 1 to 4, and reinforcing fiber substrate.

## Patentansprüche

1. Benzoxazinharzzusammensetzung, umfassend:
(A) eine Verbindung mit einem Benzoxazinring in deren Molekül, dargestellt durch die Formel (1): 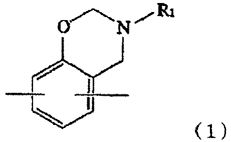 worin R₁ für eine Alkylgruppenkette mit 1 bis 12 Kohlenstoffatomen, eine cyclische Alkylgruppe mit 3 bis 8 Kohlenstoffatomen, eine Phenylgruppe oder eine Phenylgruppe, welche mit einer Alkylgruppenkette mit 1 bis 12 Kohlenstoffatomen oder Halogen substituiert ist, steht; und ein Wasserstoffatom an wenigstens eines der Kohlenstoffatome des aromatischen Rings in ortho- oder para-Position zum Kohlenstoffatom, an welches das Sauerstoffatom gebunden ist, gebunden ist;
(B) ein Epoxidharz;
(C) Bisphenolsulfid und
(D) ein die Zähigkeit verbesserndes Mittel,
wobei der Gehalt des Epoxidharzes (B) 10 bis 60 Massenteile, bezogen auf 100 Massenteile der Verbindung (A) beträgt,
wobei der Gehalt des Bisphenolsulfids (C) 5 bis 30 Massenteile, bezogen auf 100 Massenteile der Verbindung (A) und des Epoxidharzes (B) zusammen beträgt,
und wobei der Gehalt des die Zähigkeit verbessernden Mittels (D) 1 bis 60 Massenteile, bezogen auf 100 Massenteile der Verbindung (A) beträgt.

2. Benzoxazinharzzusammensetzung gemäß Anspruch 1, wobei das die Zähigkeit verbessernde Mittel (D) wenigstens eines ist, ausgewählt aus der Gruppe, bestehend aus anorganischen Feinpartikeln, organischen Feinpartikeln sowie einer Dispersion von anorganischen und/oder organischen Feinpartikeln in einem Flüssigharz oder einem Harzmonomer.

3. Benzoxazinharzzusammensetzung gemäß Anspruch 1, wobei das Epoxidharz (B) wenigstens ein Epoxidharz ist, ausgewählt aus der Gruppe, bestehend aus Epoxidharzen vom Cresol-Novolak-Typ, Epoxidharzen vom Phenol-Novolak-Typ, Epoxidharzen vom Biphenyltyp, Epoxidharzen vom Naphthalintyp, Epoxidharzen vom aromatischen Glycidylestertyp, Epoxidharzen vom aromatischen Amintyp, Epoxidharzen vom Resorcintyp und Epoxidharzen vom alicyclischen Typ.

4. Benzoxazinharzzusammensetzung gemäß Anspruch 1, wobei das Bisphenolsulfid (C) Bis(4-hydroxyphenyl)sulfid ist.

5. Prepreg, erhalten durch Imprägnieren eines verstärkenden Fasersubstrats mit einer Benzoxazinharzzusammensetzung gemäß einem der Ansprüche 1 bis 4.

6. Faserverstärktes Verbundmaterial, umfassend ein gehärtetes Produkt einer Benzoxazinharzzusammensetzung gemäß einem der Ansprüche 1 bis 4 und ein verstärkendes Fasersubstrat.

## Revendications

1. Composition de résine de benzox azine comprenant :
(A) un composé présentant dans sa molécule un noyau benzoxazine représenté par la formule (1) : 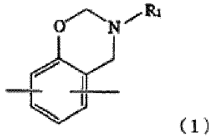 où R₁ représente un groupe alkyle en chaîne ayant de 1 à 12 atomes de carbone, un groupe alkyle cyclique ayant de 3 à 8 atomes de carbone, un groupe phényle, ou un groupe phényle substitué avec un groupe alkyle en chaîne ayant de 1 à 12 atomes de carbone ou un atome d'halogène ; et un atome d'hydrogène est lié à au moins un des atomes de carbone du noyau aromatique à la position ortho ou para par rapport à l'atome de carbone auquel l'atome d'oxygène est lié ;
(B) une résine époxy ;
(C) du sulfure de bisphénol ; et
(D) un agent d'amélioration de la ténacité,
où une teneur de ladite résine époxy (B) est de 10 à 60 parties en masse rapporté à 100 parties en masse du composé (A),
où une teneur dudit sulfure de bisphénol (C) est de 5 à 30 parties en masse rapporté à 100 parties en masse du composé (A) et de la résine époxy (B) ensemble,
où une teneur dudit agent d'amélioration de la ténacité (D) est de 1 à 60 parties en masse rapporté à 100 parties en masse du composé (A).

2. Composition de résine de benzoxazine selon la revendication 1, dans laquelle ledit agent d'amélioration de la ténacité (B) est au moins un choisi dans le groupe constitué de fines particules inorganiques, de fines particules organiques, et une dispersion de fines particules inorganiques et/ou organiques dans une résine liquide ou un monomère de résine.

3. Composition de résine de benzoxazine selon la revendication 1, dans laquelle ladite résine époxy (B) est au moins une résine époxy choisie dans le groupe constitué de résines époxy de type crésol novolaque, de résines époxy de type phénol novolaque, de résines époxy de type biphényle, de résine époxy de type naphtalène, de résines époxy de type ester glycidylique aromatique, de résines époxy de type amine aromatique, de résines époxy de type résorcine, et de résine époxy de type alicyclique.

4. Composition de résine de benzoxazine selon la revendication 1, dans laquelle ledit sulfure de bisphénol (C) est le bis(4-hydroxyphényl)sulfure.

5. Pré-imprégné obtenu par imprégnation d'un substrat de fibres de renforcement avec une composition de résine de benzoxazine selon l'une quelconque des revendications 1 à 4.

6. Matériau composite renforcé de fibres comprenant un produit durci d'une composition de résine de benzoxazine selon l'une quelconque des revendications 1 à 4, et un substrat de fibres de renforcement.
